# EUROPÄISCHE PATENTSCHRIFT

(11) **EP 0 499 809 B1**
(45) Veröffentlichungstag und Bekanntmachung des Hinweises auf die Patenterteilung: **07.12.1994**
(21) Anmeldenummer: 92100962.7
(22) Anmeldetag: 22.01.1992
(51) Int. Cl.: F16G 13/16, F16L 3/01

(54) **Energieführungskette**
Supporting chain for energy carriers
Chaîne porteuse pour lignes de transport d'énergie

(30) Priorität: 22.02.1991 DE 4105653
(43) Veröffentlichungstag der Anmeldung: 26.08.1992
(73) Patentinhaber: Kabelschlepp Gesellschaft mit beschränkter Haftung, 57074 Siegen (DE)
(72) Erfinder: Wehler, Herbert, Dipl.-Ing., W-5908 Neunkirchen (DE); Mack, Paul-Werner, W-5963 Wenden (DE); Weber, Willibald, W-5902 Netphen (DE)
(74) Vertreter: Kahlhöfer, Hermann, Dipl.-Phys.

(56) Entgegenhaltungen:
- EP-A- 0 286 442
- DE-A- 3 318 365
- DE-A- 3 709 740
- DE-C- 3 714 056
- DE-U- 9 102 121
- DE-U- 9 102 122

## Beschreibung

Die Erfindung betrifft eine Energieführungskette zum Führen von Energieleitern, insbesondere Kabel oder Schläuche von einem festen Anschluß zu einem beweglichen Verbraucher, bestehend aus einer Vielzahl von Kettengliedern, die aus zwei im Abstand voneinander und parallel zueinander angeordneten Kettenlaschen und zwei die Kettenlaschen untereinander verbindenden Traversen bestehen, denen zumindest eine Traverse um eine Gelenkachse schwenkbeweglich an einer Kettenlasche befestigt ist.

Eine gattungsgemäße Energieführungskette ist beispielsweise aus der DE-PS 33 18 365 bekannt. Diese vorbekannte Energieführungskette besteht aus einem einteilig und formstabil ausgebildeten, U-förmigen Aufnahmeteil, dessen Schenkel Außenlaschen mit Anschlägen zur Begrenzung des gegenseitigen Schwenkwinkels bilden. Die Außenlaschen sind auf einer Seite mit einer einteilig angeformten Traverse verbunden, während eine weitere Traverse aus einem getrennten Schließbügel besteht, der die freien Enden der Außenlaschen miteinander verbindet. Dieser Schließbügel ist mit einem lösbaren Scharnier an einer Außenlasche angelenkt und an der anderen Außenlasche mit einem elastischen Haken verriegelbar. Das Scharnier besteht aus einer in die freie Kante einer Außenlasche freiliegend eingeformten Gelenkachse mit senkrecht zu den Außenlaschen abgeflachtem Kreisquerschnitt und abgerundeten Schmalseiten und aus einer in das Ende des Schließbügels eingeformten, mit Hinterschneidungen versehenen, angeschnittenen, teilkreisförmigen Ausnehmung. Diese Ausgestaltung ermöglicht, daß der Schließbügel nach dem Aufstecken auf die Gelenkachse und Verschwenken in Richtung auf die gegenüberliegende Außenlasche kraft- und formschlüssig mit der Gelenkachse verspannt ist.

Diese vorbekannte Energieführungskette hat sich zur Führung von Energieleitungen bewährt. Insbesondere ist die Energieführungskette durch Verschwenken des Schließbügels leicht zu öffnen, so daß der Energieführungskanal von einer Seite gut zugänglich ist.

Ferner ist aus der DE-PS 37 14 056 eine gattungsgemäße Energieführungskette bekannt, die aus einer Anzahl gelenkig miteinander verbindbaren Kettengliedern besteht, welche als Spritzgußteile aus elastischem Kunststoff mit jeweils zwei Seitenlaschen und zwei Querstegen ausgebildet sind. Von diesen Querstegen ist zumindest der obere Quersteg an seinen Stirnseiten mit Rastkörpern versehen, die lösbar in korrespondierenden Rastkörperaufnahmen der Seitenlaschen steckbar sind. Bei dieser vorbekannten Energieführungskette ist zumindest ein Teil eines Drehgelenks einstückig an einem Quersteg angeordnet, so daß der Innenraum der einzelnen Kettenglieder nur durch Verschwenken dieses Quersteges um den Drehpunkt zugänglich ist. Demnach ist ein Öffnen der Kettenglieder nur dann möglich, wenn ausreichende Platzverhältnisse zum Verschwenken des Quersteges gegeben sind.

Schließlich ist aus der DE-PS 37 09 740 eine Energieführungskette mit im Querschnitt U-förmigen Gliedern bekannt, die zwei Seitenwangen und einen diese Seitenwangen verbindenden Steg aufweisen. Ferner weist diese vorbekannte Energieführungskette einen schwenkbar an beiden Kettenlaschen angelenkten Arm auf. Dieser Arm hat an seinen beiden freien Enden paarweise nach außen gerichtete Lagerzapfen, die in als Lageraugen dienende Bohrungen eingreifen können, welche in den Kettenlaschen in Längsrichtung angeordnet sind. Der Arm hat ferner von seinen beiden Enden ausgehende Trennschlitze, durch die Schenkel gebildet werden, an deren freien Enden die Lagerzapfen angeordnet sind. Diese Trennschlitze begrenzen mittlere Teile, welche in bezug auf die Mittelachse des Armes kürzer sind als die Schenkel, so daß ein Freiraum an den Enden der mittleren Teile entsteht. Die jeweils inneren Enden der Schenkel bzw. der mittleren Teile enden, durch die Trennschlitze bedingt, auf gleicher Höhe und gehen in einen mittleren, die Gesamtbreite des Armes einnehmenden Bereich über. Um den Arm zu lösen, ist es notwendig, zuerst einen der mittleren Teile aus seiner Normallage relativ zur Mittelebene des Armes zu biegen, wonach die beiden diesen mittleren Teil flankierenden Schenkel relativ aufeinander zu bewegbar sind und aus den korrespondierenden Bohrungen herausdrückbar sind. Es ist also bei dieser vorbekannten Energieführungskette nachteilig, daß das Öffnen der einzelnen Kettenglieder sehr umständlich und nur unter Zuhilfenahme von Werkzeugen möglich ist.

Ausgehend von diesem vorbekannten Stand der Technik liegt der Erfindung die **Aufgabe** zugrunde, eine gattungsgemäße Energieführungskette zu schaffen, die zumindest an ihrer Oberseite beidseitig, d.h. an beiden Kettenlaschen zu öffnen ist und einen ungehinderten Zugang zum Energieführungskanal zuläßt, ohne daß die Halterungen von den Kettenlaschen demontiert werden müssen.

Die erfindungsgemäße **Lösung** dieser Aufgabe sieht vor, daß an beiden Kettenlaschen angeordnete Drehgelenke aus einem in Längsrichtung der Kettenlaschen angeordneten und die Gelenkachse bildenden Zapfen und aus einer lösbar auf den Zapfen ausgesteckten Halterung bestehen, daß die Halterung eine mit Hinterschneidungen versehene U-förmige Ausnehmung haben und daß die Traverse an beiden Halterungen befestigt ist, wobei die Traverse in beide Halterungen eindrehbar ist.

Die Kettenglieder einer nach dieser technischen Lehre ausgebildeten Energieführungskette haben den **Vorteil,** daß sie in einfacher Weise durch Lösen einer die Traverse haltenden Halterung von dem die Gelenkachse bildenden Zapfen und gemeinsames Verschwenken der Traverse mit der Halterung um den Zapfen der zweiten Kettenlasche geöffnet werden können. Eine derartige Öffnungsweise ist dann geboten, wenn ausreichende Raumverhältnisse vorliegen, die ein Verschwenken der Traverse um den in der Kettenlasche angeordneten Zapfen erlauben. Die Kettenglieder einer Energieführungskette werden zur Wartung, zur Ergänzung oder zur Entnahme von Energieleitern geöffnet. Hierzu stellt die erfindungsgemäß ausgebildete Energieführungskette zwei Möglichkeiten zur Verfügung. Zum einen kann die Energieführungskette in der zuvor beschriebenen Art und Weise durch verschwenken der Traverse geöffnet werden. Zum anderen ist es jedoch auch möglich, die Energieführungskette dadurch zu öffnen, daß die Traverse aus den Halterungen herausgedreht wird, ohne daß die Halterungen von den die Gelenkachse bildenden Zapfen gelöst werden müssen. Diese zweite Art der Öffnung der Energieführungskette ist auch bei beschränkten Raumverhältnissen möglich, die ein Verschwenken der Traverse um die Gelenkachse nicht zulassen. Ferner ist es auf diese Art ohne Probleme möglich, die Traversen der erfindungsgemäßen Energieführungskette auszutauschen, ohne daß auch die als Teil der Drehgelenke ausgebildeten Halterungen ausgetauscht werden müssen. Hieraus folgt insbesondere der **Vorteil,** daß der Austausch der Traversen für den Anwender der erfindungsgemäßen Energieführungskette mit geringen Kosten verbunden ist. Schließlich wird durch die erfindungsgemäße Ausbildung der Energieführungskette der **Vorteil** erzielt, daß die Energieführungskette in Form eines Baukastensystems mit verschiedenen Traversen angeboten werden kann. Ein nachträgliches Umrüsten der Energieführungskette mit unterschiedlichen Traversen ist ohne Austausch bzw. Veränderungen der kostenintensiv herzustellenden Drehgelenke, welche aus in den Kettenlaschen integrierten Zapfen und aus auf diese Zapfen aufgesteckten Halterungen bestehen, möglich.

Bei einer vorteilhaften Ausgestaltung der erfindungsgemäßen Energieführungskette sind die Zapfen in V-förmigen Ausnehmungen der Kettenlaschen angeordnet, so daß die Kettenlaschen durch die Integration der Zapfen keine über die Außenkontur der Energieführungskette hervorstehenden Teile aufweisen. Die Halterungen sind V-förmig ausgebildet und haben an ihrer Unterseite eine Federklammer, mit der sie auf die Zapfen aufsteckbar sind. Diese Ausgestaltung hat den Vorteil, daß die Halterungen die V-förmigen Ausnehmungen der Kettenlaschen vollständig ausfüllen, so daß keine Verschmutzung in den geschlossenen Energieführungskanal eintreten können. Insbesondere wird der Eintritt von Metallspänen oder dgl. verhindert. Ferner ist es bei dieser erfindungsgemäßen Weiterbildung vorteilhaft, daß die Halterungen in einfacher Weise mittels der Federklammern auf die Zapfen gesteckt oder von diesen abgezogen werden können. Hierdurch wird eine sehr einfache Handhabung erzielt, die auch ein vollständiges Entfernen der Halterungen mit den daran befestigten Traversen ermöglicht. Die Halterungen und die Federklammern sind vorzugsweise aus einem Kunststoff gefertigt, der eine ausreichende Elastizität aufweist, so daß die Federklammern auch nach mehrmaligem Öffnen der Energieführungskette noch ausreichend fest auf die Zapfen aufsteckbar sind und ein ungewolltes Öffnen der einzelnen Kettenglieder verhindert.

Die Halterungen sind um einen Winkel von mehr als 90° um die Zapfen zur Außenseite der Kettenlaschen schwenkbar. Durch diese Ausgestaltung ist die Traverse so weit schwenkbar, daß der Energieführungskanal weit geöffnet werden kann.

Bei einer zweiten Ausführungsform sind an gegenüberliegenden Flächen von Ausnehmungen der Kettenlaschen zwei Zapfen angeordnet, wobei die Halterungen zwei auf die Zapfen passende, hinterschnittene Ausnehmungen aufweisen. Diese Ausgestaltung ermöglicht die Verwendung verschiedener Halterungen, die je nach Anwendungsfall V-förmig oder U-förmig ausgebildet sind. Ein weiterer Vorteil dieser Ausgestaltung ist, daß der Schwenkbereich jeder Halterung um die zwei Zapfen groß ist. Schließlich ist diese Ausführungsform auch bei kleineren Energieführungsketten verwendbar.

Zur Erleichterung des Zusammenbaus der Energieführungskette ist vorgesehen, daß die Halterungen einen Ansatz haben, der in eine korrespondierende Stufe in der Ausnehmung der Kettenlasche eingreift. Beim Zusammenbau wird die Halterung in die Ausnehmung eingesetzt und derart verschwenkt, daß der Ansatz in die korrespondierende Stufe der Ausnehmung in der Kettenlasche eingreift. In dieser Stellung kann dann die Traverse an den sich gegenüberliegenden Halterungen befestigt werden.

Eine leichte und reibungsfreie Verschwenkbarkeit der Halterungen wird dadurch erzielt, daß die der Kettenlasche zugewandten Unterseiten der Halterungen als Kreisbogenabschnitt ausgebildet sind.

Die Halterungen einer weiteren Ausführungsform sind um einen Winkel zwischen 90° und 240°, vorzugsweise 180° um den Zapfen schwenkbar.

Weitere Einzelheiten und Vorteile ergeben sich aus der nachfolgenden Beschreibung der Zeichnung, in denen zwei Ausführungsbeispiele der Erfindung dargestellt sind. In den Zeichnungen zeigt:

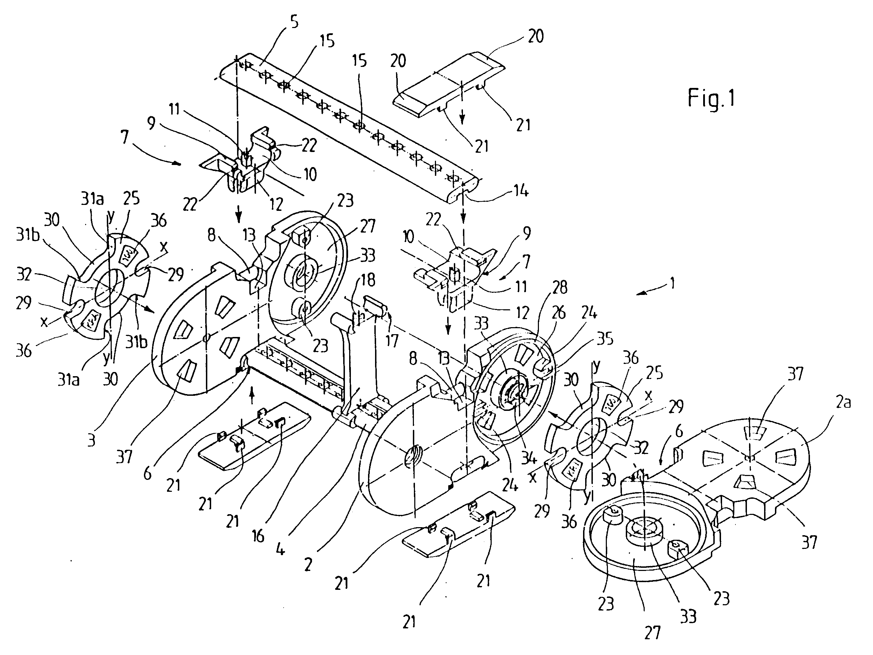

- Fig. 1: eine Energieführungskette mit einer ersten Ausführungsform des Drehgelenkes in einem perspektivischen Sprengbild;
- Fig. 2: eine Energieführungskette mit einer zweiten Ausführungsform des Drehgelenkes in einem perspektivischen Sprengbild;
- Fig. 3: eine Kettenlasche mit dem Drehgelenk gemäß Fig. 2 in einer Ansicht;
- Fig. 4: die Kettenlasche gemäß Fig. 3 in einer entlang der Linie IV-IV geschnittenen Seitenansicht;
- Fig. 5: die Kettenlasche gemäß den Figuren 3 und 4 in einer Draufsicht entlang der Linie V-V;
- Fig. 6: die Kettenlasche gemäß den Figuren 3 bis 5 in einer Draufsicht entlang der Linie VI-VI;
- Fig. 7: eine Halterung in Ansicht;
- Fig. 8: die Halterung gemäß Fig. 7 in einer Draufsicht entlang der Linie VIII-VIII;
- Fig. 9: die Halterung gemäß den Figuren 7 und 8 in einer Draufsicht entlang der Linie IX-IX;
- Fig. 10: die Halterung gemäß den Figuren 7 bis 9 in einer geschnittenen Seitenansicht entlang der Linie X-X;
- Fig. 11: die Halterung gemäß den Figuren 7 bis 10 in einer Seitenansicht entlang der Linie XI-XI;
- Fig. 12: eine Kettenlasche mit der Halterung gemäß den Figuren 7 bis 11 in einer geschnittenen Seitenansicht;
- Fig. 13: die Kettenlasche gemäß Fig. 12 mit der um 90° verschwenkten Halterung und
- Fig. 14: die Kettenlasche gemäß Fig. 12 mit der um 180° verschwenkten Halterung.

Ein Kettenglied 1 besteht aus zwei im Abstand voneinander und parallel zueinander angeordneten Kettenlaschen 2 und 3, die mit Traversen 4 und 5 untereinander verbunden sind. Die Traverse 4 hat auf ihrer Gesamtlänge einen abgeflachten Querschnitt mit abgerundeten Schmalseiten und kann in mit Hinterschneidungen versehene angeschnittene Ausnehmungen 6 in den Schmalseiten der Kettenlaschen 2 und 3 eingelegt und durch Verdrehen um ihre Längsachse kraft- und formschlüssig mit den Kettenlaschen 2, 3 verbunden werden. Die Traverse 5 hat ebenfalls auf ihrer gesamten Länge einen abgeflachten Querschnitt mit abgerundeten Schmalseiten und kann in schwenkbar an den Schmalseiten der Kettenlaschen 2 und 3 angeordneten Drehgelenken 7 eingelegt werden.

Die Drehgelenke 7 bestehen aus einem, in einer der Kettenlaschen 2, 3 angeordnetem Zapfen 8 und einer darauf schwenkbar aufgesteckten Halterung 9, welche eine im wesentlichen U-förmige Ausnehmung 10 hat. In dieser Ausnehmung 10, in der die Traverse 5 durch Verdrehen um ihre Längsachse kraft- und formschlüssig mit der Halterung 9 verbunden wird, ist ein Stift 11 angeordnet. Die Halterung 9 hat ferner an ihrer Unterseite eine Federklammer 12, mit der die Halterung 9 auf den in einer Ausnehmung 13 und in Längsrichtung der Kettenlasche 2, 3 verlaufenden Zapfen 8 gesteckt ist.

Die Traversen 4 und 5 haben auf ihrer gesamten Länge einen abgeflachten Querschnitt mit abgerundeten Schmalseiten. In jeweils einer Seite der Traversen 4 und 5 ist eine in Längsrichtung der Traverse 4, 5 verlaufende Nut 14 angeordnet. Ferner weisen die Traversen 4 und 5 eine Vielzahl von Bohrungen 15 auf. In die beiden äußeren Bohrungen 15 der Traverse 5 greifen bei in die Halterung 9 eingedrehter Traverse 5 die Stifte 11 ein, so daß die Traverse 5 quer zur Längsrichtung des Kettengliedes 1 unverschiebbar gehalten ist. Die Traversen 4 und 5 können wahlweise derart an den Kettenlaschen 2, 3 befestigt werden, daß die Nuten 14 nach innen oder nach außen gerichtet angeordnet sind.

Zwischen den Traversen 4, 5 ist ein Trennsteg 16 angeordnet, der am oberen und unteren Ende mit U-förmigen Halterungen 17 versehen ist, in welchen Stifte 18 für den Eingriff in die Bohrungen 15 der Traversen 4, 5 befestigt sind. Die Länge der Stifte 18 entspricht der Tiefe der Nut 14. Auf diese Weise ist der Trennsteg 16 in Längsrichtung der Traversen 4, 5 verschiebbar, wenn die Traversen 4, 5 mit nach innen gerichteten Nuten 14 befestigt sind. Sind die Nuten 14 der Traversen 4, 5 nach außen gedreht, greifen die Stifte 18 des Trennstegs 16 in die Bohrungen 15 der Traversen 4, 5, so daß der Trennsteg 16 nicht in Längsrichtung der Traversen 4, 5 verschiebbar ist. Es ist auch möglich, mehrere Trennstege 16 zwischen den Traversen 4, 5 eines Kettengliedes 1 einzusetzen.

An den oberen und unteren Schmalseiten der Kettenlaschen 2, 3 sind Gleitkufen 19 lösbar befestigt, die aufeinander gleiten, wenn das obere Trum einer Energieführungskette sich auf dem unteren Trum abstützt. Dabei ist die Länge der Gleitkufen 19 so bemessen, daß die Abstände zwischen den Gleitkufen 19 benachbarter Kettenlaschen 2, 2a überbrückt werden. Die Gleitkufen sind an der unteren Schmalseite der Kettenlaschen 2, 3 unmittelbar und an den oberen Schmalseiten der Kettenlaschen 2, 3 mittelbar befestigt, nämlich an der Halterung 9 des Drehgelenks 7.

Jede Gleitkufe 19 ist plattenförmig ausgebildet und hat an ihrer den Schmalseiten der Kettenlaschen 2, 3 abgewandten Oberfläche zwei in Längsrichtung angeordnete Abschrägungen 20. An der Unterseite der Gleitkufen 19 sind vier Rastelemente 21 angeordnet, die in entsprechende Ausnehmungen 22 an den Kettenlaschen 2, 3 bzw. an den Halterungen 9 einschiebbar sind.

Der gegenseitige Schwenkwinkel benachbarter Kettenglieder wird durch Anschlagnocken 23 und 24 und einen Anschlageinsatz 25 begrenzt. Die Anschlagnocken 24 der Kettenlasche 2 sind in einer Ausnehmung 26 der Kettenlasche 2 angeordnet und in Längsrichtung der Kettenlasche 2 ausgerichtet. Die Anschlagnocken 23 an einem Ende der Kettenlasche 2a sind im Vergleich zu den Anschlagnocken 24 am anderen Ende der gleichen Kettenlasche 2a um 90° versetzt in entsprechenden Ausnehmungen 26, 27 angeordnet. Demzufolge steht die Verbindungslinie zwischen den Anschlagnocken 23 rechtwinklig zu der Längsachse des Kettengliedes 2a, während die beiden anderen Anschlagnocken 24 auf der Längsachse der Kettenlasche 2a liegen. Die Kettenlaschen 2, 3 haben einen die Ausnehmung 26 umgreifenden Rand 28, dessen Außendurchmesser geringfügig kleiner als der Innendurchmesser der kreisförmigen Ausnehmung 27 ist, in welche der Rand 28 eingreift.

Der zwischen den benachbarten Kettenlaschen 2 und 2a in die Ausnehmungen 26, 27 eingesetzte Anschlageinsatz 25 ist im wesentlichen zylindrisch ausgebildet. Der Anschlageinsatz 25 hat zwei diametral gegenüberliegende Schlitze 29 und zwei Ausnehmungen 30. Die Schlitze 29 haben eine den Anschlagnocken 23 bzw. 24 entsprechende Breite, wogegen sich die Ausnehmungen 30 über einen den Schwenkwinkel benachbarter Kettenglieder bestimmenden Kreisbogenabschnitt erstrecken. Die Ausnehmungen 30 haben jeweils eine Anschlagfläche 31a und eine Anschlagfläche 31b, wobei auch die Anschlagflächen 31a und 31b jeweils diametral gegenüberliegend an dem Anschlageinsatz 25 angeordnet sind. In dem dargestellten Ausführungsbeispiel sind die Anschlagflächen 31a um 90° im mathematisch positiven Drehsinn versetzt zu den Schlitzen 29 angeordnet. Der Winkel zwischen den Anschlagflächen 31a und 31b beträgt in dem dargestellten Ausführungsbeispiel ungefähr 60°.

Die Anschlageinsätze 25 haben eine zentrale Bohrung 32 durch die entsprechende, in den Ausnehmungen 26, 27 angeordnete Zapfen 33 greifen. Die Kettenlaschen 2, 2a benachbarter Kettenglieder werden mittels Verbindungselementen 34 miteinander verbunden, wobei die Anschlageinsätze 25 derart in der Ausnehmung 26 bzw. 27 der Kettenlaschen 2, 2a angeordnet sind, daß die Schlitze 29, den Anschlagnocken 24 umgreifen, der einen in radialer Richtung der Ausnehmung 26 verlaufenden Schlitz 35 aufweist. Hierdurch ist der Anschlageinsatz 25 unverdrehbar in der Kettenlasche 2 gehalten. Bei dieser Anordnung sind die Anschlagnocken 23 in der Kettenlasche 2a in den diametral gegenüberliegenden Ausnehmungen 30 des Anschlageinsatzes 25 geführt. Durch die Anschlagflächen 31a und 31b wird der gegenseitige Schwenkwinkel zwischen dem Kettenglied 1 und einem nur durch die Kettenlasche 2a dargestellten benachbarten Kettenglied begrenzt. Durch die rechtwinklige Anordnung der Anschlagflächen 31a zu den Schlitzen 29 und der Ausbildung der Ausnehmung 30 können die benachbarten Kettenglieder aus einer gestreckten Lage nur in eine Richtung um einen dem Winkel der Ausnehmung 30 entsprechenden Winkel verschwenkt werden. Um die Verschwenkrichtung der Kettenglieder zueinander zu verändern, ist es lediglich notwendig, die Anschlageinsätze 25 um 180° um eine ihrer Achsen X oder Y verdreht in die Ausnehmungen 26, 27 einzulegen.

Zur Anzeige der Schwenkrichtung und des Schwenkwinkels haben die aus Kunststoff bestehenden Anschlageinsätze 25 eingeformte Kennzeichnungen 36, welche durch entsprechende Öffnungen 37 in den Kettenlaschen 2, 3, 2a erkennbar sind.

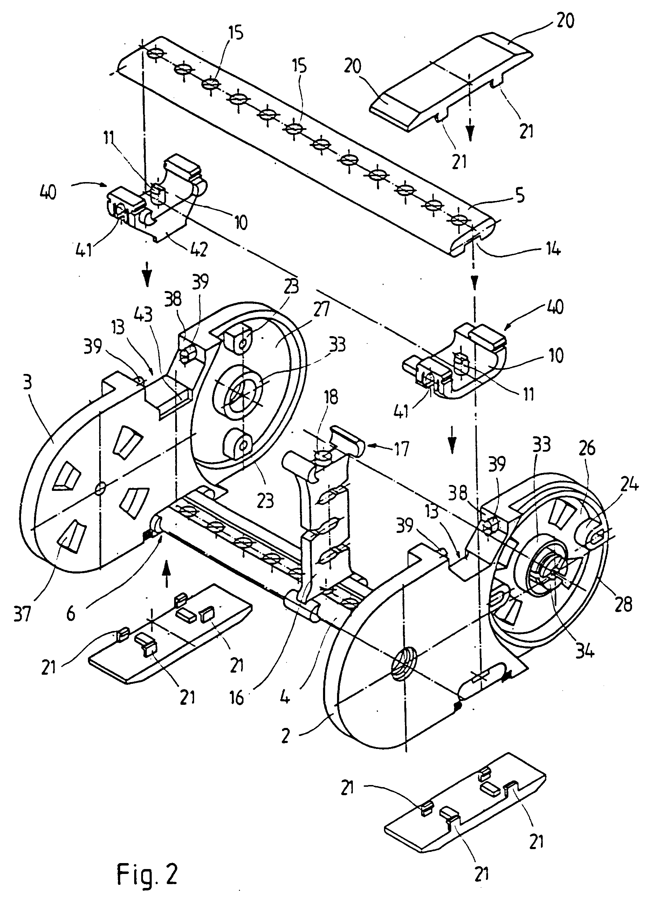

Bei dem in der Fig. 2 dargestellten Ausführungsbeispiel eines Kettengliedes 1 sind an gegenüberliegenden Flächen 38 der V-förmigen Ausnehmungen 13 zwei Zapfen 39 angeordnet. In die V-förmigen Ausnehmungen 13 sind Halterungen 40 schwenkbeweglich eingesetzt, wobei die Halterungen 40 jeweils zwei auf die Zapfen 39 passende, hinterschnittene Ausnehmungen 41 aufweisen.

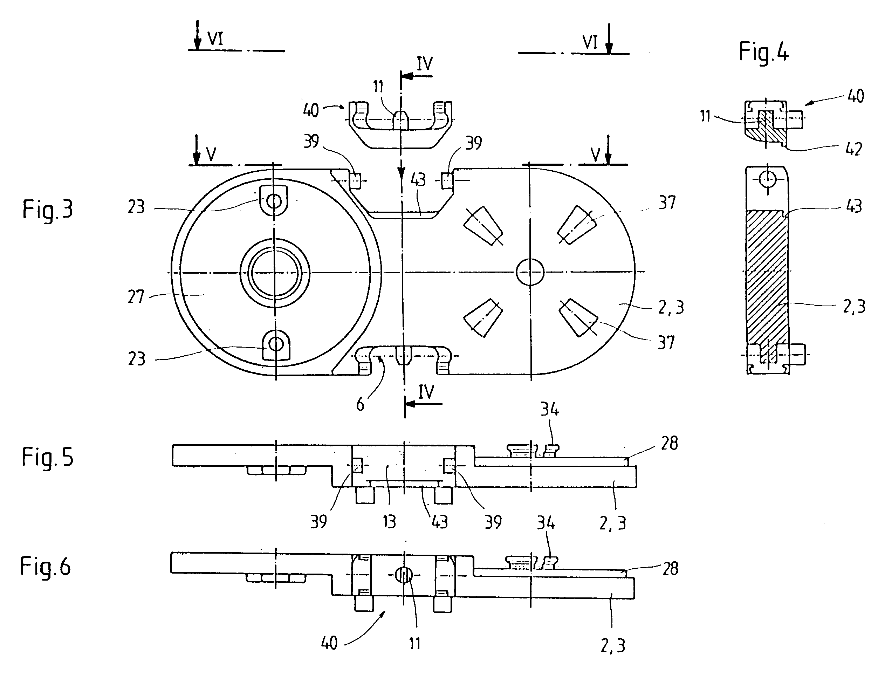

Die Halterung 40 ist an ihrer dem Energieführungskanal zugewandten Seite V-förmig ausgebildet, so daß sie die V-förmige Ausnehmung 13 vollständig ausfüllt. Die Halterung 40 ist an ihrer dem Äußeren der Kettenlasche 2, 2a, 3 zugewandten Seite U-förmig ausgebildet, so daß zwischen der Halterung 40 und der V-förmigen Ausnehmung 13 ein Spalt angeordnet ist. Wie insbesondere aus den Figuren 3 bis 5 zu erkennen ist, hat die Halterung 40 einen Ansatz 42, der in eine korrespondierende Stufe 43 in der Ausnehmung 13 eingreift. Diese Stufe dient als Anschlagfläche. Beim Zusammenbau der Kettenglieder wird die Halterung 40 derart eingesetzt, daß der Ansatz 42 in der Stufe 43 anliegt, so daß die Halterung 40 eine definierte Position zum Einsatz der Traverse 5 einnimmt.

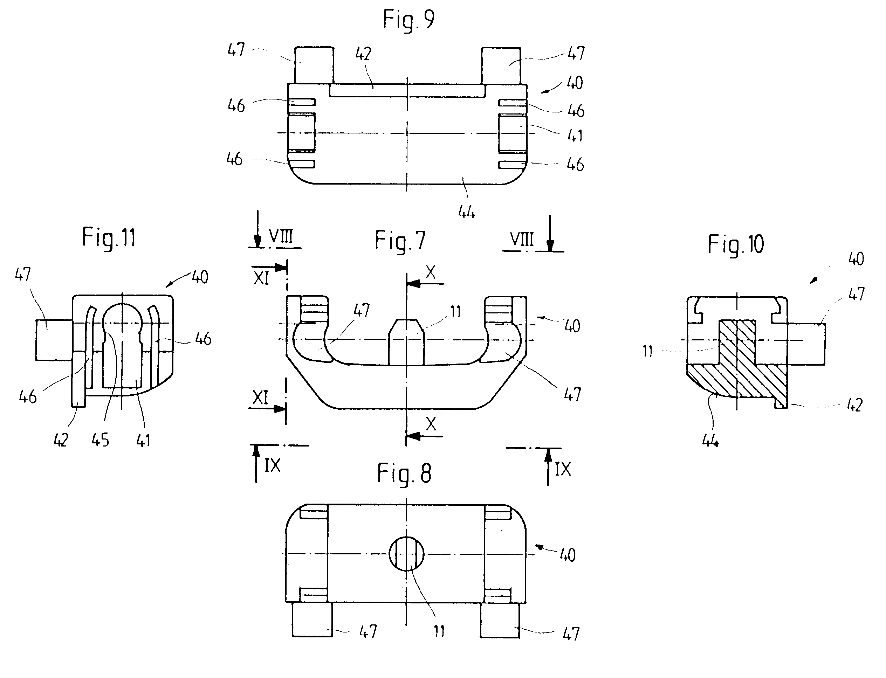

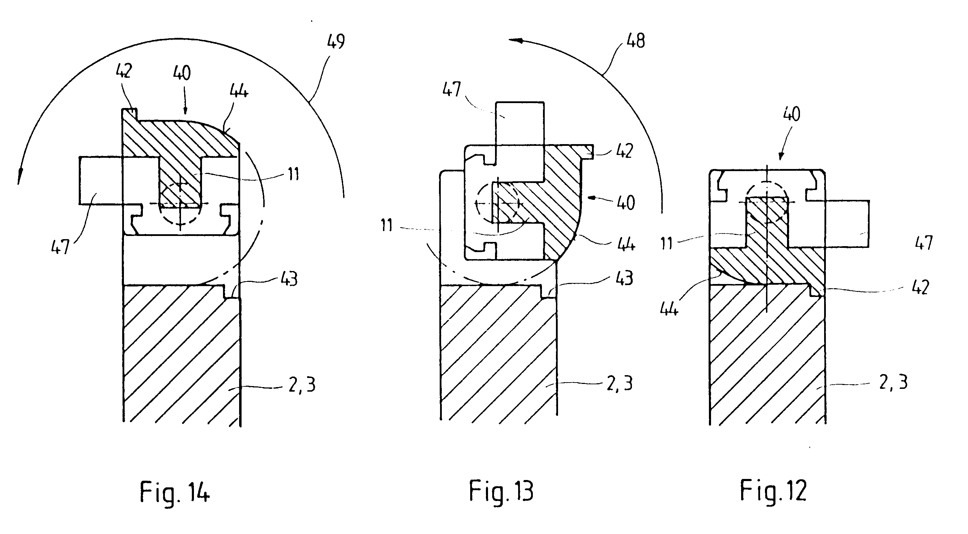

In den Figuren 7 bis 9 ist die Halterung 40 detailliert dargestellt. Es ist zu erkennen, daß ein Teil der der Kettenlasche 2, 3 zugewandten Unterseite 44 der Halterung 40 als Kreisbogenabschnitt ausgebildet ist. Dieser Kreisbogenabschnitt liegt an dem dem Ansatz 42 gegenüberliegenden Ende der Halterung 40. In der Fig. 11 ist die Ausnehmung 41 mit einer Hinterschneidung 45 erkennbar. Die Hinterschneidungen 45 in den Ausnehmungen 41 halten die Halterung 40 auf den Zapfen 39, so daß ein unbeabsichtigtes Öffnen des Kettengliedes 1 vermieden wird. Ein leichtes Öffnen des Kettengliedes wird dadurch erzielt, daß die Halterung 40 aus einem dauerelastischen Kunststoff besteht. Die beim Öffnen und Schließen des Kettengliedes 1 erforderliche Elastizität der Halterung 40 wird dadurch verbessert, daß parallel zu den Ausnehmungen 41 Schlitze 46 verlaufen. Diese Schlitze 46 ermöglichen ein Ausweichen der Hinterschneidung 45 beim Aufstecken und beim Abziehen der Halterung 40 auf bzw. von den Zapfen 39.

Wie insbesondere aus der Fig. 7 zu erkennen ist, hat die Halterung 40 eine mit Hinterschneidungen versehene U-förmige Ausnehmung 10 in die die Traverse 5 eindrehbar ist. In diese Ausnehmung 10 ist der Stift 11 angeordnet, welcher in die korrespondierende Bohrung 15 in der Traverse greift. Zur Führung der Traverse 5 sind an beiden Seiten der Ausnehmung 10 sich in Längsrichtung der Traverse erstreckende Ansätze 47 angeordnet.

In der Fig. 12 ist die Kettenlasche 2, 3 mit der eingesetzten Halterung 40 dargestellt. In dieser dargestellten Stellung der Halterung 40 greift der Ansatz 42 in die Stufe 43. Das Kettenglied 1 ist mit der in der Fig. 12 nicht dargestellten Traverse 5 verschlossen. In der Fig. 13 ist mit einem Pfeil 48 die Schwenkrichtung der Halterung 40 um einen Winkel von 90° dargestellt. Schließlich zeigt in der Fig. 14 ein Pfeil 49 die Schwenkrichtung der nunmehr um 180° gegenüber der in Fig. 12 dargestellten Stellung verschwenkten Halterung 40.

| **Bezugszeichenliste** | | | |
|---|---|---|---|
| 1 | Kettenglied | 31a | Anschlagfläche |
| 2 | Kettenlasche | 31b | Anschlagfläche |
| 2a | Kettenlasche | 32 | Bohrung |
| 3 | Kettenlasche | 33 | Zapfen |
| 4 | Traverse | 34 | Vorbindungselement |
| 5 | Traverse | 35 | Schlitz |
| 6 | Ausnehmung | 36 | Kennzeichnung |
| 7 | Drehgelenk | 37 | Öffnung |
| 8 | Zapfen | 38 | Fläche |
| 9 | Halterung | 39 | Zapfen |
| 10 | Ausnehmung | 40 | Halterung |
| 11 | Stift | 41 | Ausnehmung |
| 12 | Federklammer | 42 | Ansatz |
| 13 | Ausnehmung | 43 | Stufe |
| 14 | Nut | 44 | Unterseite |
| 15 | Bohrung | 45 | Hinterschneidung |
| 16 | Trennsteg | 46 | Schlitz |
| 17 | Halterung | 47 | Ansatz |
| 18 | Stift | 48 | Pfeil |
| 19 | Gleitkufe | 49 | Pfeil |
| 20 | Abschrägung | | |
| 21 | Rastelement | | |
| 22 | Ausnehmung | | |
| 23 | Anschlagnocken | | |
| 24 | Anschlagnocken | | |
| 25 | Anschlageinsatz | | |
| 26 | Ausnehmung | | |
| 27 | Ausnehmung | | |
| 28 | Rand | | |
| 29 | Schlitz | | |
| 30 | Ausnehmung | | |

## Patentansprüche

1. Energieführungskette zum Führen von Energieleitern, insbesondere Kabel oder Schläuche von einem festen Anschluß zu einem beweglichen Verbraucher, bestehend aus einer Vielzahl von Kettengliedern (1), die aus zwei im Abstand voneinander und parallel zueinander angeordneten Kettenlaschen (2,3) und zwei die Kettenlaschen untereinander verbindenden Traversen (4,5) bestehen, von denen zumindest eine Traverse (5) um eine Gelenkachse schwenkbeweglich an einer Kettenlasche (2,3) befestigt ist,
**dadurch gekennzeichnet,**
daß an beiden Kettenlaschen (2,3) angeordnete Drehgelenke (7) aus einem in Längsrichtung der Kettenlaschen (2,3) angeordneten und die Gelenkachse bildenden Zapfen (8) und aus einer lösbar auf den Zapfen (8) aufgesteckten Halterung (9) bestehen,
daß die Halterungen (9) eine mit Hinterschneidungen versehene U-förmige Ausnehmung (10) haben und
daß die Traverse (5) an beiden Halterungen (9) befestigt ist, wobei die Traverse (5) in beide Halterungen (9) eindrehbar ist.

2. Energieführungskette nach Anspruch 1, dadurch gekennzeichnet, daß die Zapfen (8) in V-förmigen Ausnehmungen (13) der Kettenlaschen (2,3) angeordnet sind.

3. Energieführungskette nach Anspruch 1, dadurch gekennzeichnet, daß die Halterungen (9) V-förmig ausgebildet sind und an ihrer Unterseite eine Federklammer (12) haben, mit der sie auf die Zapfen (8) aufsteckbar sind.

4. Energieführungskette nach Anspruch 1, dadurch gekennzeichnet, daß die Halterungen (9) um einen Winkel größer 90° um die Zapfen (8) zur Außenseite der Kettenlaschen (2,3) schwenkbar sind.

5. Energieführungskette nach Anspruch 1, dadurch gekennzeichnet, daß an gegenüberliegenden Flächen (38) von V-förmigen Ausnehmungen (13) der Kettenlaschen (2,3) zwei Zapfen (39) angeordnet sind und daß die Halterungen (40) zwei auf die Zapfen (39) passende, hinterschnittene Ausnehmungen (41) aufweisen.

6. Energieführungskette nach Anspruch 5, dadurch gekennzeichnet, daß die Halterungen (40) U-förmig ausgebildet sind.

7. Energieführungskette nach Anspruch 6, dadurch gekennzeichnet, daß die Halterungen (40) einen Ansatz (42) haben, der in eine korrespondierende Stufe (43) in der Ausnehmung (13) eingreift.

8. Energieführungskette nach Anspruch 5, dadurch gekennzeichnet, daß die der Kettenlasche (2,3) zugewandten Unterseiten (44) der Halterungen (40) als Kreisbogenabschnitt ausgebildet sind.

9. Energieführungskette nach Anspruch 1, dadurch gekennzeichnet, daß in den Ausnehmungen (10) ein Stift (11) angeordnet ist, der in eine korrespondierende Bohrung (15) in der Traverse (5) greift.

10. Energieführungskette nach Anspruch 5, dadurch gekennzeichnet, daß die Halterungen (40) um einen Winkel zwischen 90° und 240°, vorzugsweise 180° um die Zapfen (8) schwenkbar sind.

## Claims

1. A power guide chain for guiding power conductors, particularly cables or pipes, from a fixed terminal to a movable consumer, comprising a plurality of chain links (1) which comprise two link plates (2, 3) arranged parallel to and spaced from each other and two cross-pieces (4, 5) which join together the link plates, of which cross-pieces at least one (5) is fixed to a link plate (2, 3) for pivotal movement about a pivot axis,
characterised in that
hinges (7) arranged on both link plates (2, 3) comprise a pin (8) arranged in the longitudinal direction of the link plates (2, 3) and forming the pivot axis, and a mounting means (9) which is detachably attached to the pin (8),
the mounting means (9) have a U-shaped recess (10) provided with undercut portions and
the cross-piece (5) is fixed to both mounting means (9), wherein the cross-piece (5) is able to be twisted into both mounting means (9).

2. A power guide chain according to Claim 1, characterised in that the pins (8) are arranged in V-shaped recesses (13) in the chain links.

3. A power guide chain according to Claim 1, characterised in that the mounting means (9) are V-shaped and have a spring clip (12) on their underside, by means of which they are able to be attached to the pins (8).

4. A power guide chain according to Claim 1, characterised in that the mounting means (9) are pivotable through an angle greater than 90° about the pins (8) towards the outside of the link plates (2, 3).

5. A power guide chain according to Claim 1, characterised in that two pins (39) are arranged on the oppositely disposed faces (38) of V-shaped recesses (13) of the link plates (2, 3) and that the mounting means (40) have undercut recesses (41) which fit the pins (39).

6. A power guide chain according to Claim 5, characterised in that the mounting means (40) are U-shaped.

7. A power guide chain according to Claim 6, characterised in that the mounting means (40) have a projection (42) which engages into a corresponding step (43) in the recess (13).

8. A power guide chain according to Claim 5, characterised in that the undersides (44) of the mounting means (40), facing the link plate (2, 3), are designed with an arcuate section.

9. A power guide chain according to Claim 1, characterised in that a pin (11) is arranged in the recesses (10), the pin engaging into a corresponding bore (15) in the cross-piece (5).

10. A power guide chain according to Claim 5, characterised in that the mounting means (40) are pivotable through an angle of between 90° and 240°, preferably 180°, about the pins (8).

## Revendications

1. Chaîne de guidage d'énergie pour guider des conducteurs d'énergie, en particulier des câbles ou des tuyaux flexibles, d'un raccord fixe à un organe utilisateur mobile, ladite chaîne étant formée d'une pluralité de maillons (1) qui sont constitués de deux flasques (2, 3), disposés à distance l'un de l'autre et parallèlement entre eux, et de deux traverses (4, 5) qui relient les flasques entre eux, au moins une traverse (5) étant fixée à un flasque (2, 3) avec possibilité de pivotement autour d'un axe d'articulation, caractérisée en ce que des articulations tournantes (7) disposées sur les deux flasques (2, 3) sont constituées d'un tourillon (8), qui est disposé dans le sens longitudinal des flasques (2, 3) et qui forme l'axe d'articulation, et d'un support (9) qui est emboîté de manière amovible sur le tourillon (8), en ce que les supports (9) comportent un évidement en U (10) pourvu de décrochements, et en ce que la traverse (5) est fixée à deux supports (9), la traverse (5) pouvant être encastrée par rotation dans les deux supports (9).

2. Chaîne de guidage d'énergie selon la revendication 1, caractérisée en ce que les tourillons (8) sont disposés dans des évidements en V (13) des flasques (2, 3).

3. Chaîne de guidage d'énergie selon la revendication 1, caractérisée en ce que les supports (9) présentent la forme d'un V et comportent, sur leur face inférieure, un crampon élastique (12) qui permet de les emboîter sur les tourillons (8).

4. Chaîne de guidage d'énergie selon la revendication 1, caractérisée en ce que les supports (9) peuvent pivoter selon un angle supérieur à 90° autour des tourillons (8) vers la face extérieure des flasques (2, 3).

5. Chaîne de guidage d'énergie selon la revendication 1, caractérisée en ce que deux tourillons (39) sont disposés sur des surfaces en vis-à-vis (38) d'évidements en V (13) des flasques (2, 3), et en ce que les supports (40) comportent deux évidements en décrochement (41) qui s'adaptent sur les tourillons (39).

6. Chaîne de guidage d'énergie selon la revendication 5, caractérisée en ce que les supports (40) présentent la forme d'un U.

7. Chaîne de guidage d'énergie selon la revendication 6, caractérisée en ce que les supports (40) comportent une pièce rapportée (42) qui s'engage dans un étage correspondant (43) de l'évidement (13).

8. Chaîne de guidage d'énergie selon la revendication 5, caractérisée en ce que les faces inférieures (44) des supports (40) tournées vers le flasque (2, 3) ont la forme d'un segment d'arc de cercle.

9. Chaîne de guidage d'énergie selon la revendication 1, caractérisée en ce que, dans les évidements (10), est disposée une broche (11) qui s'engage dans un perçage correspondant (15) de la traverse (5).

10. Chaîne de guidage d'énergie selon la revendication 5, caractérisée en ce que les supports (40) peuvent pivoter autour des tourillons (8) selon un angle compris entre 90° et 240°, de préférence de 180°.
